# EUROPEAN PATENT SPECIFICATION

(11) **EP 4 417 277 B1**
(45) Date of publication and mention of the grant of the patent: **21.05.2025**
(21) Application number: 23178810.0
(22) Date of filing: 13.06.2023
(51) Int. Cl.: A63F 13/22, A63F 13/23, A63F 13/98

(54) **METHOD FOR PROCESSING GAME CONTROL INSTRUCTION AND EXTENSION DEVICE OF GAME CONTROLLER**
VERFAHREN ZUR VERARBEITUNG VON SPIELSTEUERUNGSANWEISUNGEN UND ERWEITERUNGSVORRICHTUNG EINES SPIELSTEUERGERÄTS
PROCÉDÉ DE TRAITEMENT D'INSTRUCTION DE COMMANDE DE JEU ET DISPOSITIF D'EXTENSION DE CONTRÔLEUR DE JEU

(30) Priority: 20.02.2023 CN 202310144990
(43) Date of publication of application: 21.08.2024
(73) Proprietor: Qingdao Thunderobot Technology Co., Ltd, Qingdao, Shandong 266101 (CN)
(72) Inventor: LI, Yanbing, Qingdao, Shandong, 266101 (CN); LU, Kailin, Qingdao, Shandong, 266101 (CN); WANG, Shaohua, Qingdao, Shandong, 266101 (CN)
(74) Representative: Ziebig Hengelhaupt Intellectual Property Attorneys Patentanwaltskanzlei PartGmbB

(56) References cited:
- US-A1- 2011 312 417
- US-A1- 2017 001 109
- US-A1- 2018 326 299
- US-A1- 2020 061 456
- US-A1- 2020 222 799

## Description

### TECHNICAL FIELD

The present invention relates to information processing, and particularly to a method for processing a game control instruction and an extension device of a game controller.

### BACKGROUND

A game controller is an input device of an electronic game machine, and an object, such as a simulated character in an electronic game, or the like, can be controlled by manipulating a button, a stick, or the like, of the game controller. The game controller is generally provided in a form of a gamepad.

The gamepads designed by different manufacturers have different shapes, hand feels, functions, or the like. With a development of electronic game industry, a large number of game platforms appear, such as Xbox by Microsoft, PlayStation series by Sony and Switch by Nintendo.

The game controllers used in game devices (or called game consoles) of some game platforms can only support the game platforms of their own; for example, a Switch Pro gamepad only has an instruction set of Nintendo, is only compatible with a game device of Nintendo, and cannot be linked with other devices, thus limiting use scenarios of various game platforms. This situation affects universality of a gamepad device and reduces use experiences of a game player.

For instance prior art US2017001109 (A1) discloses an adapter for use in a video game controller including a housing having a shape adapted to be securely placed in a compartment or attached to the controller; a console port adapted to interface with a game console for transmitting game information and actions to the game console; a controller port adapted to interface with the controller to receive game functions from the controller; at least one game actuator; and a function control module operatively connected to the console port, the controller port and the at least one game actuator mechanism.

US2011312417 (A1) teaches a Team Play Game Device that creates the capability to have multiple players play computer games simultaneously without requiring games to be modified to support multiple players. It accomplishes this goal by making multiple game controllers look like single game controllers to the game device. It is a general game solution that can be applied to every game device and game controller combination including all game consoles and personal computers.

US2020222799 (A1) discloses an external control device for a game controller, including a casing, a second adapter, a mode selector, a memory, and a conversion circuit. The second adapter is provided for being connected to the first adapter of the game controller. The mode selector is provided for outputting one of selection signals. The memory stores different encode data. The conversion circuit selects encode data according to the selection signals output from the mode selector, and encodes and converts the button signal into a pre-formatted wireless signal according to the selected encode data, and then sends the pre-formatted wireless signal through a wireless signal transmitting circuit.

### SUMMARY

The invention is defined by the appended set of claims, which provided for a method for processing a game control instruction according to claim 1, and an extension device of a game controller according to claim 8.

Further preferred embodiments are defined by the dependent claims 2 through 7.

### BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:
Fig. 1 is a schematic diagram of an extension device of a game controller according to an embodiment of the present invention;
Fig. 2 is a schematic diagram after assembly of the extension device of a game controller shown in Fig. 1 and the game controller;
Fig. 3 is a system architecture diagram when an extension device of a game controller according to an embodiment of the present invention is applied to a game system;
Fig. 4 is a schematic flow diagram of a method for processing a game control instruction according to an embodiment of the present invention; and
Fig. 5 is a flow chart of an application example of a method for processing a game control instruction according to an embodiment of the present invention.

### DETAILED DESCRIPTION

In the description of embodiments, it should be understood that orientations or positional relationships indicated by terms "front", "rear", etc. are based on the orientation of a game controller 10 in a normal use state as a reference, and can be determined with reference to the orientations or positional relationships shown in the drawings; for example, "front" indicating the orientation refers to a side of the game controller 10 facing a game. It is used only for conveniently describing the embodiments, but does not indicate or imply that an indicated apparatus or element must have a specific orientation or be constructed and operated in a specific orientation. Therefore, it cannot be understood as a limitation on the present invention.

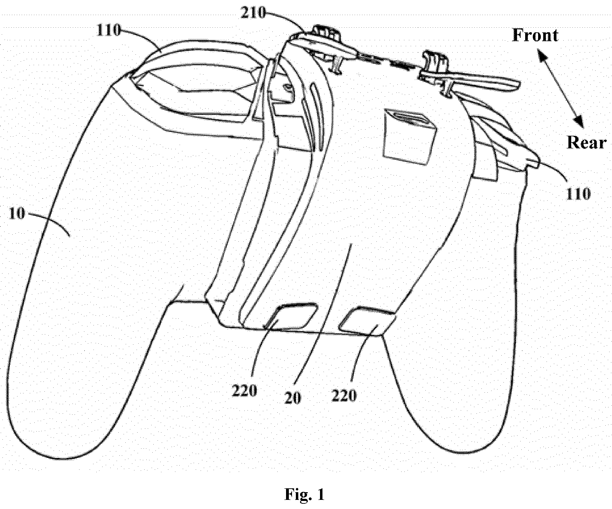

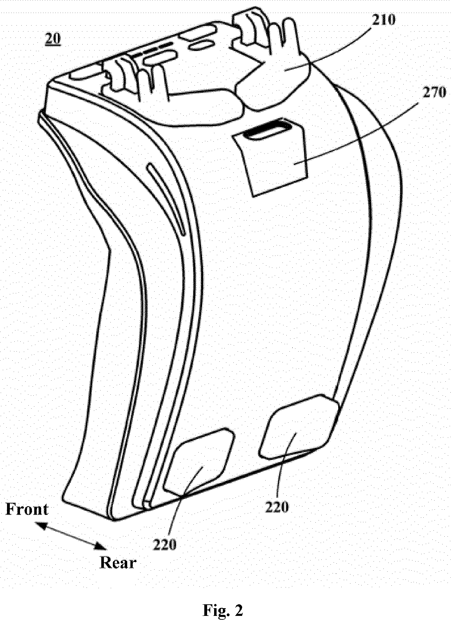

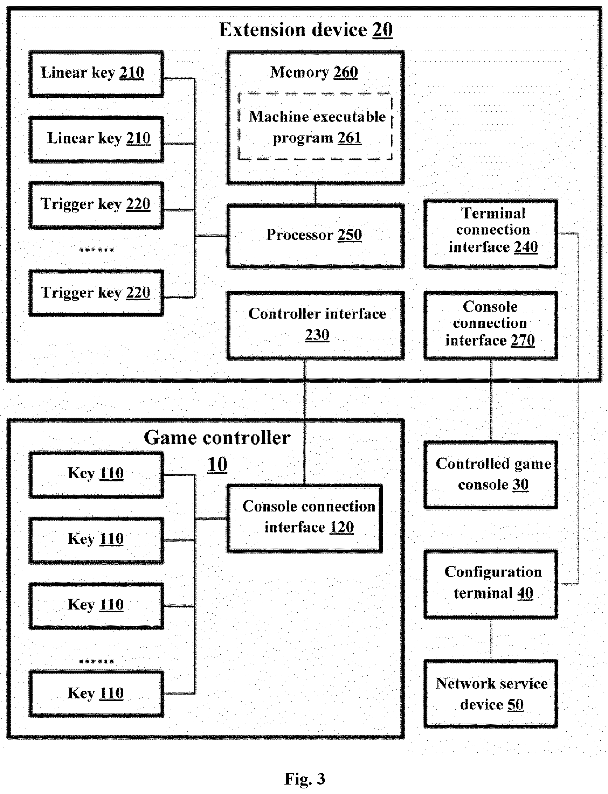

Fig. 1 is a schematic diagram of an extension device of a game controller according to an embodiment of the present invention; Fig. 2 is a schematic diagram after assembly of the extension device of a game controller shown in Fig. 1 and the game controller; Fig. 3 is a system architecture diagram when an extension device of a game controller according to an embodiment of the present invention is applied to a game system.

The present embodiment first provides an extension device 20 for a game controller 10, and the extension device 20 can be detachably mounted on the game controller 10 to expand the number of keys and/or key functions of the game controller 10. The game controller 10 may be a gamepad or other game manipulation devices, such as a Switch series gamepad, a PS series gamepad, an Xbox series gamepad, and gamepads by other third party manufacturers. The extension device 20 has a connection structure with a shape matched with a shape of the game controller 10, and is mounted to the game controller 10 by clamping, or the like. In the embodiment shown in Figs. 1 and 2, the extension device 20 may be mounted to a back of the game controller 10 and has an attachment surface with an external contour matched with external contours of a side surface and the back of the game controller 10.

The game controller 10 has a plurality of keys 110 (including pressed physical keys and a joystick or touch key equivalent to the physical keys). The game controller 10 converts trigger signals of the plurality of keys 110 into control instructions according to an encoding rule thereof through a control board thereof, and the control instructions can be used for a game console 30 matched with the game controller 10. In the prior art, the game controller 10 can be directly connected with the matched game console 30 using a console connection interface 120 thereof. The console connection interface 120 of the game controller 10 may be a wired interface (for example, a USB interface) or a wireless interface (for example, Bluetooth, Wi-Fi, or the like).

A controller interface 230 of the extension device 20 according to the present embodiment is matched with the console connection interface 120 of the game controller 10. For example, in some embodiments, the controller interface 230 of the extension device 20 and the console connection interface 120 of the game controller 10 may be USB interfaces fitted with each other; for example, the controller interface 230 of the extension device 20 is a USB Type-C male interface, and the console connection interface 120 of the game controller 10 is a USB Type-C female interface.

The extension device 20 is provided with a plurality of keys 210, 220 which may include a linear key 210 and a trigger key 220, and output of the linear key 210 may be a numerical value corresponding to a pressed key stroke depth, which may be understood as generation of a trigger signal with a strength value. In some embodiments, the output of the linear key 210 may vary between 0 and 255. The linear key 210 may be used as a key trigger, for example, as an accelerator or other variables during game play. The linear key 210 of the extension device 20 may expand the functions of the game controller 10 in a case where the game controller 10 does not have a linear key. The trigger key 220 may be a common on-type key or touch key, which may be configured to replace the key 110 of the game controller 10, or may serve as a newly added key, so as to expand the game controller 10.

The extension device 20 may be connected with a controlled game console 30 using a console connection interface 270, that is, send a control instruction to the controlled game console 30 through the console connection interface 270. The console connection interface 270 may be configured according to a connection interface possibly configured by the controlled game console 30, for example, configured as a wired interface, such as a USB interface, or the like, or a wireless connection interface, such as Bluetooth interface, or the like.

The extension device 20 may also be connected with a configuration terminal 40 using a terminal connection interface 240. The configuration terminal 40 may be an intelligent terminal, such as a mobile phone, a tablet computer, or the like, which may be provided with an application app for configuring the extension device 20, such that a user may configure functions, performances, or the like, of the extension device 20. In some embodiments, the extension device 20 may further be connected with a network service device 50 through the configuration terminal 40, so as to acquire an encoding rule, or the like, from a network.

That is, the controller interface 230 is configured as a wired transmission interface (USB Type-C, or the like) matched with the console connection interface 120 of the game controller 10, and the terminal connection interface and the console connection interface are configured as independent wireless transmission interfaces. In some embodiments, the extension device 20 may be provided with plural Bluetooth interfaces independent of each other as the controller interface 230, the terminal connection interface 240, and the console connection interface 270; for example, a traditional Bluetooth 2.0 interface may be used as the controller interface 230, and BLE may be used as the terminal connection interface 240.

The extension device 20 is further provided with a processor 250, a memory 260, and a machine executable program 261 stored in the memory 260 and run on the processor 250, and the processor 250, when executing the machine executable program 261, implements any method for processing a game control instruction according to the present embodiment.

The processor 250 may be a single-core processor, a multi-core processor, a computing cluster, or any number of other configurations. The memory 260 may include a random access memory (RAM), a read only memory, a flash memory, or any other suitable storage systems.

The processor 250 may be connected to an I/O interface (input/output interface) of one or more I/O devices (input/output devices). The I/O device may include any of the keys 210, 220 described above.

The machine executable program 261 described herein may be downloaded to the memory 260 over a network, such as the Internet, a local area network, a wide area network, and/or a wireless network.

It should be noted that the flow chart and the block diagram in the specification show system architectures, functions and operations that may be implemented by the system, method and computer program product according to plural embodiments of the present invention. In this regard, each block in the flow chart or block diagram may represent a module, program segment, or portion of an instruction, which includes one or more executable instructions for implementing the specified logical function(s). In some alternative implementations, the functions noted in the blocks may occur out of the order noted in the drawings. For example, two blocks shown in succession may, in fact, be executed substantially concurrently, or the blocks may sometimes be executed in a reverse order, depending upon the functionality involved. It will also be noted that each block in the block diagram and/or flow chart, and combinations of the blocks in the block diagram and/or flow chart, can be implemented by special purpose hardware-based systems that perform the specified functions or acts, or combinations of special purpose hardware and computer instructions.

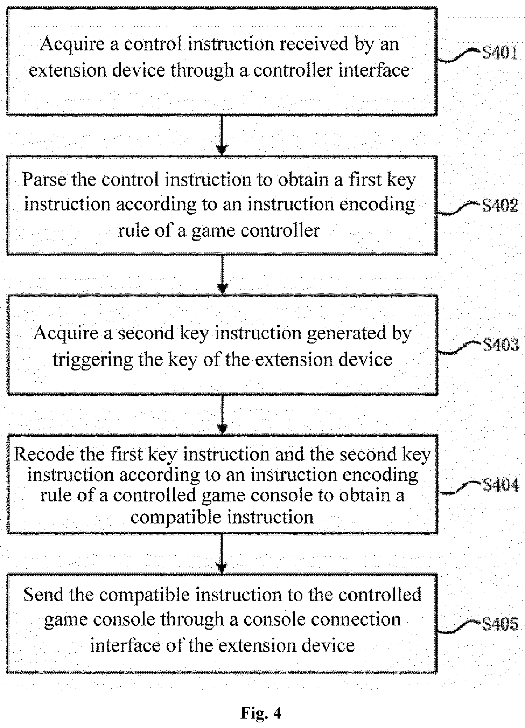

Fig. 4 is a schematic flow diagram of a method for processing a game control instruction according to an embodiment of the present invention, and the method for processing a game control instruction may include:
step S401: acquiring a control instruction received by the extension device 20 through the controller interface 230.
Step S402: parsing the control instruction to obtain a first key instruction according to an instruction encoding rule of the game controller 10.
Step S403: acquiring a second key instruction generated by triggering the keys 210, 220 of the extension device 20.
Step S404: recoding the first key instruction and the second key instruction according to an instruction encoding rule of the controlled game console 30 to obtain a compatible instruction.
Step S405: sending the compatible instruction to the controlled game console through the console connection interface 270 of the extension device 20.

In the method, the extension device 20 receives the control instruction of the game controller 10 through the controller interface 230, the control instruction is parsed to obtain the first key instruction, the second key instruction is generated utilizing the trigger condition of the keys 210, 220 of the extension device 20, and the first key instruction and the second key instruction are recoded according to the instruction encoding rule of the controlled game console 30 to obtain the compatible instruction; finally, the compatible instruction sent by the extension device 20 to the controlled game console 30 can be recognized by the controlled game console after recoding. The above re-processing process can make the game controller 10 applied to different kinds of game platforms, such that the game controller 10 is more universal and is not limited to the original console. In addition, the functions of the game controller 10 are expanded by the keys 210, 220 of the extension device 20, and game keys can be enriched, thus facilitating the operation of the user.

Before step 401, the method according to the present embodiment may further include: first acquiring configuration information of the extension device 20. The configuration information may include key value information, a linear function start-stop option, controller modification information, a conflict handling option, or the like, for configuring the function and performance of the extension device 20.

The key value information is used to define key values of the keys 210, 220. Step S403 may include: acquiring a trigger signal of the key of the extension device; and converting the trigger signal into the second key instruction according to the key value information. That is, the key values of the keys 210, 220 of the extension device 20 may both support user definition.

In a case where the extension device 20 is provided with the linear key 210, the linear function start-stop option may be used to define whether the linear key 210 is used as a linear trigger or simply as a common key. Step S403 may further include: receiving a pressing signal of the linear key; judging whether the linear function start-stop option is configured to be started; if yes, generating the trigger signal with a strength value according to the key stroke depth of the pressing signal; and if no, generating the trigger signal under a condition that the key stroke depth of the pressing signal is greater than a set trigger threshold. The linear key 210 may provide, for the game controller 10, functions that the game controller 10 does not have, thereby accomplishing more game tasks. For games which do not require linear functions, the linear key 210 may be selected not to be used, or defined as another common key, and a trigger key stroke may be set.

The controller modification information may be used to configure and modify the function or performance of the game controller 10, for example, modify the key value, sensitivity, a response curve, a dead zone range, or the like, of the key 110 of the game controller 10. After the controller modification information is set, step S404 may include: modifying the first key instruction according to the controller modification information, and recoding the modified first key instruction and the second key instruction according to the instruction encoding rule of the controlled game console 30. That is, the recoding process of the extension device 20 adapts the instruction to the controlled game console 30, and can also personalize the game controller 10.

The conflict handling option includes: controller priority, extension device priority, and concurrent use.

Under a condition that the conflict handling option is set as the controller 10 priority, the step of recoding the first key instruction and the second key instruction according to an instruction encoding rule of the controlled game console 30 further includes: identifying whether a duplicate key value exists in the first key instruction and the second key instruction, if yes, deleting a duplicate key value part in the second key instruction, and recoding the first key instruction and the second key instruction after the duplicate key value part is deleted according to the instruction encoding rule of the controlled game console 30. That is, in the case of the controller 10 priority, if the key values of the keys 210, 220 of the extension device 20 conflict with the key value of the key 110, the control instruction of the key 110 is merely retained, and a response to the keys 210, 220 is ignored.

Under a condition that the conflict handling option is set as the extension device 20 priority, the step of recoding the first key instruction and the second key instruction according to an instruction encoding rule of the controlled game console 30 further includes: identifying whether a duplicate key value exists in the first key instruction and the second key instruction, if yes, deleting a duplicate key value part in the first key instruction, and recoding the first key instruction after the duplicate key value part is deleted and the second key instruction according to the instruction encoding rule of the controlled game console 30. That is, in the case of the extension device 20 priority, if the key values of the keys 210, 220 of the extension device 20 conflict with the key value of the key 110, the control instruction of the keys 210, 220 is merely retained, and a response to the key 110 is ignored.

Under a condition that the conflict handling option is set as the concurrent use, the step of recoding the first key instruction and the second key instruction according to an instruction encoding rule of the controlled game console 30 further includes: identifying whether a duplicate key value exists in the first key instruction and the second key instruction, if yes, simultaneously retaining a duplicate key value part in the first key instruction and the second key instruction, and recoding the first key instruction and the second key instruction according to the instruction encoding rule of the controlled game console 30. That is, in the case of the concurrent use, if the key values of the keys 210, 220 of the extension device 20 conflict with the key value of the key 110, the control instruction of the key 110 and the control instruction of the keys 210, 220 are both retained, and the control instructions are encoded according to a pressed sequence of the key 110 and the keys 210, 220, such that the user can obtain a response when pressing any conflicting key.

Before step S401, the method may further include: acquiring feature information of the game controller 10 and the controlled game console 30 respectively; determining the instruction encoding rule of the game controller 10 according to the feature information of the game controller 10; and determining the instruction encoding rule of the controlled game console 30 according to the feature information of the controlled game console 30. The feature information of the game controller 10 and the controlled game console 30 may include models, specifications, or the like, of the game controller 10 and the controlled game console 30. The corresponding encoding and decoding rules may be correspondingly obtained using the feature information of the game controller 10 and the controlled game console 30. The above feature information may be input by the game user, or determined by the extension device 20 by means of instruction detection. A process of determining the models and specifications of the game controller 10 and the controlled game console 30 by the extension device 20 by means of instruction detection may include: sending, by the extension device 20, different detection instructions to the game controller 10 and the controlled game console 30 respectively, and determining the platform of the game controller 10 and that of the controlled game console 30 according to responses of the game controller 10 and the controlled game console 30 to the detection instructions.

The step of determining the instruction encoding rule of the controlled game console 30 according to the feature information of the controlled game console 30 may include: inquiring whether the extension device stores a corresponding instruction encoding rule according to the feature information of the controlled game console 30; if yes, calling the instruction encoding rule of the controlled game console 30; and if no, sending a rule inquiring request to the network service device 50, and acquiring an instruction encoding rule responding to the rule inquiring request from the network service device 50. The instruction encoding rule of the game controller 10 is determined in a similar manner to the instruction encoding rule of the controlled game console 30, and if the extension device 20 is not provided with the encoding rule, the encoding rule may be requested from the network service device 50. In this way, the extension device 20 can adapt to the latest game console 30 and game controller 10, thereby further improving universality of the extension device 20.

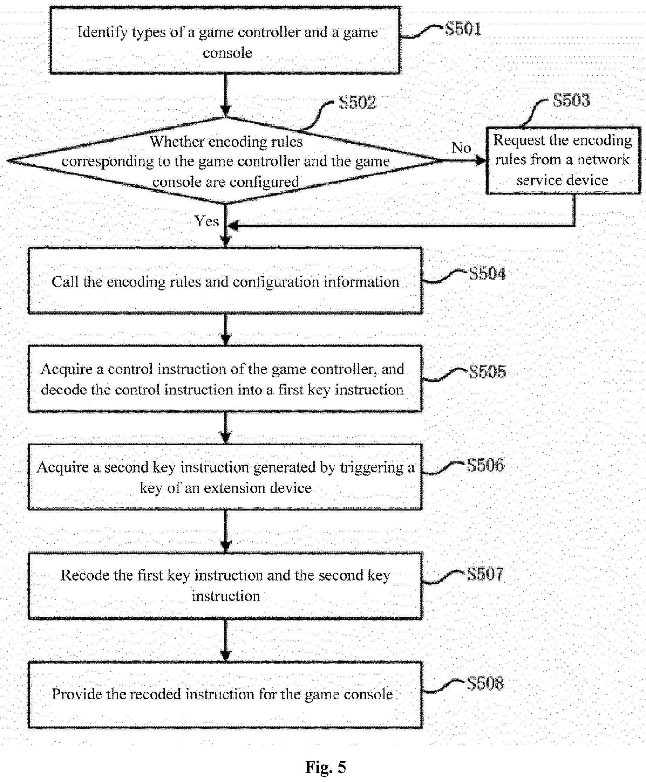

Fig. 5 is a flow chart of an application example of a method for processing a game control instruction according to an embodiment of the present invention. The flow shows a working process of the extension device 20, and after the extension device 20 is connected with the game controller 10 and the game console 30, the following steps may be included:
step S501: identifying types of the game controller 10 and the game console 30;
step S502: checking whether encoding rules corresponding to the game controller 10 and the game console 30 are configured;
step S503: if no, requesting the encoding rules from the network service device 50;
step S504: calling the encoding rules and configuration information;
step S505: acquiring a control instruction of the game controller 10, and decoding the control instruction into a first key instruction;
step S506: acquiring a second key instruction generated by triggering a key of the extension device 20;
step S507: recoding the first key instruction and the second key instruction; and
step S508: providing the recoded instruction for the game console 30.

With the method for processing a game control instruction and the extension device of a game controller according to the present embodiment, the game controller 10, such as Switch Pro, or the like, can be compatible with its own platform, and can also be expanded to be applied to various game platforms, such as Windows, Android, iOS, MacOS, Switch, or the like, and it can run in an Xinput or Dinput mode under Windows, an Android touch screen mapping mode, and an MFi mode of iOS, thereby greatly improving compatibility; user definition of various parameters, such as joystick adjustment, key change, macro programming, or the like, is realized, thus further improving convenience of a game operation. When the parameters are configured using the configuration terminal 40, such as a mobile phone, or the like, the configuration parameters can be changed in real time without interrupting the game operation.

In addition, the extension device 20 according to the present embodiment is easy to use, and for the game controller 10 and the game console 30, compatible protocols are used, and the game controller 10 and the game console 30 are not required to be modified.

## Claims

1. A method for processing a game control instruction, comprising:
acquiring a control instruction received by an extension device (20) through a controller interface (230), the controller interface (230) being connected with a console connection interface (270) of a game controller (10);
parsing the control instruction to obtain a first key instruction according to an instruction encoding rule of the game controller (10);
acquiring a second key instruction generated by triggering a key of the extension device (20);
recoding the first key instruction and the second key instruction according to an instruction encoding rule of a controlled game console (30) to obtain a compatible instruction; and
sending the compatible instruction to the controlled game console (30) through the console connection interface (270) of the extension device (20),
wherein before the step of acquiring a control instruction received by an extension device (20) through a controller interface (230), the method further comprises: acquiring configuration information of the extension device (20), the configuration information comprising key value information, and the key value information being used for defining a key value of the key of the extension device (20); and
the step of acquiring a second key instruction generated by triggering a key (210, 220) of the extension device (20) comprises: acquiring a trigger signal of the key (210, 220) of the extension device (20), and converting the trigger signal into the second key instruction according to the key value information,
**characterized in that** the configuration information further comprises a conflict handling option, and the conflict handling option comprises: controller (10) priority, extension device (20) priority, and concurrent use, and
under a condition that the conflict handling option is set as the controller (10) priority, the step of recoding the first key instruction and the second key instruction according to an instruction encoding rule of a controlled game console (30) further comprises: identifying whether a duplicate key value exists in the first key instruction and the second key instruction, if yes, deleting a duplicate key value part in the second key instruction, and recoding the first key instruction and the second key instruction after the duplicate key value part is deleted according to the instruction encoding rule of the controlled game console (30);
under a condition that the conflict handling option is set as the extension device (20) priority, the step of recoding the first key instruction and the second key instruction according to an instruction encoding rule of a controlled game console (30) further comprises: identifying whether a duplicate key value exists in the first key instruction and the second key instruction, if yes, deleting a duplicate key value part in the first key instruction, and recoding the first key instruction after the duplicate key value part is deleted and the second key instruction according to the instruction encoding rule of the controlled game console (30); and
under a condition that the conflict handling option is set as the concurrent use, the step of recoding the first key instruction and the second key instruction according to an instruction encoding rule of a controlled game console (30) further comprises: identifying whether a duplicate key value exists in the first key instruction and the second key instruction, if yes, simultaneously retaining a duplicate key value part in the first key instruction and the second key instruction, and recoding the first key instruction and the second key instruction according to the instruction encoding rule of the controlled game console (30).

2. The method for processing a game control instruction according to claim 1,
wherein the key of the extension device (20) comprises a linear key, and the configuration information further comprises a linear function start-stop option, and
the step of acquiring a trigger signal of the key of the extension device (20) comprises: receiving a pressing signal of the linear key; judging whether the linear function start-stop option is configured to be started; if yes, generating the trigger signal with a strength value according to a key stroke depth of the pressing signal; and if no, generating the trigger signal under a condition that the key stroke depth of the pressing signal is greater than a set trigger threshold.

3. The method for processing a game control instruction according to claim 1 or 2,
wherein the configuration information further comprises controller modification information, and
the step of recoding the first key instruction and the second key instruction according to an instruction encoding rule of a controlled game console (30) further comprises: modifying the first key instruction according to the controller modification information, and recoding the modified first key instruction and the second key instruction according to the instruction encoding rule of the controlled game console (30).

4. The method for processing a game control instruction according to any one of claims 1 to 3, wherein the step of acquiring configuration information of the extension device (20) comprises:
connecting a configuration terminal (40) using a terminal connection interface (240) of the extension device (20); and
receiving a configuration file sent by the configuration terminal (40), and parsing the configuration file to obtain the configuration information.

5. The method for processing a game control instruction according to claim 4,
wherein the controller interface (230) is configured as a wired transmission interface matched with the console connection interface (270) of the game controller (10); and
the terminal connection interface (240) and the console connection interface (270) are configured as independent wireless transmission interfaces.

6. The method for processing a game control instruction according to any one of claims 1 to 5, before the step of acquiring a control instruction received by an extension device (20) through a controller interface (230), further comprising:
acquiring feature information of the game controller (10) and the controlled game console (30);
determining the instruction encoding rule of the game controller (10) according to the feature information of the game controller (10); and
determining the instruction encoding rule of the controlled game console (30) according to the feature information of the controlled game console (30).

7. The method for processing a game control instruction according to claim 6, wherein the step of determining the instruction encoding rule of the controlled game console (30) according to the feature information of the controlled game console (30) comprises:
inquiring whether the extension device (20) stores a corresponding instruction encoding rule according to the feature information of the controlled game console (30);
if yes, calling the instruction encoding rule of the controlled game console (30); and
if no, sending a rule inquiring request to a network service device (50), and acquiring an instruction encoding rule responding to the rule inquiring request from the network service device (50).

8. An extension device (20) of a game controller (10) configured to be attached to the game controller (10), wherein the extension device (20) is provided with a plurality of keys (210, 220), comprising:
a controller interface (230) configured to be connected with a console connection interface (270) of the game controller (10);
the console connection interface (270) configured to be connected with a controlled game console (30); and
a processor (250), a memory (260) and a machine executable program stored in the memory (260) and run on the processor (250), the processor (250), when executing the machine executable program, implementing the method for processing a game control instruction according to any one of claims 1 to 7.

## Patentansprüche

1. Verfahren zum Verarbeiten einer Spielsteueranweisung, umfassend:
Erhalten einer Steueranweisung, die von einer Erweiterungsvorrichtung (20) über eine Controllerschnittstelle (230) empfangen wird, wobei die Controllerschnittstelle (230) mit einer Konsolenverbindungsschnittstelle (270) eines Spielcontrollers (10) verbunden ist;
Analysieren der Steueranweisung gemäß einer Anweisungscodierungsregel des Spielcontrollers (10), um eine erste Tastenanweisung zu erhalten;
Erhalten einer zweiten Tastenanweisung, die durch Auslösen einer Taste der Erweiterungsvorrichtung (20) erzeugt wird;
Umcodieren der ersten Tastenanweisung und der zweiten Tastenanweisung gemäß der Anweisungscodierungsregel der gesteuerten Spielkonsole (30), um eine kompatible Anweisung zu erhalten; und
Senden der kompatiblen Anweisung an die gesteuerte Spielkonsole (30) über eine Konsolenverbindungsschnittstelle (270) der Erweiterungsvorrichtung (20),
wobei vor dem Schritt des Erhaltens einer Steueranweisung, die von der Erweiterungsvorrichtung (20) über die Controllerschnittstelle (230) empfangen wird, das Verfahren ferner umfasst: Erhalten von Konfigurationsinformation der Erweiterungsvorrichtung (20), wobei die Konfigurationsinformation eine Tastenwertinformation umfasst, wobei die Tastenwertinformation verwendet wird, um einen Tastenwert einer Taste der Erweiterungsvorrichtung (20) zu definieren; und
wobei der Schritt des Erhaltens einer zweiten Tastenanweisung, die durch Auslösen einer Taste (210, 220) der Erweiterungsvorrichtung (20) erzeugt wird, umfasst: Erhalten eines Auslösesignals der Taste (210, 220) der Erweiterungsvorrichtung (20) und Umwandeln des Auslösesignals in eine zweite Tastenanweisung gemäß der Tastenwertinformation,
**dadurch gekennzeichnet, dass** die Konfigurationsinformation ferner eine Konfliktbehandlungsoption umfasst und wobei die Konfliktbehandlungsoption umfasst: eine Priorität des Controllers (10), eine Priorität der Erweiterungsvorrichtung (20) und eine gleichzeitige Verwendung, und
wobei unter einer Bedingung, dass die Konfliktbehandlungsoption als die Priorität des Controllers (10) eingestellt ist, der Schritt des Umcodierens der ersten Tastenanweisung und der zweiten Tastenanweisung gemäß der Anweisungscodierungsregel der gesteuerten Spielkonsole (30) ferner umfasst: Identifizieren, ob ein doppelter Tastenwert in der ersten Tastenanweisung und der zweiten Tastenanweisung vorhanden ist, falls ja, Löschen eines doppelten Tastenwertteils in der zweiten Tastenanweisung und Umcodieren der ersten Tastenanweisung und der zweiten Tastenanweisung, nachdem der doppelte Tastenwertteil gemäß der Anweisungscodierungsregel der gesteuerten Spielkonsole (30) gelöscht wurde;
wobei unter einer Bedingung, dass die Konfliktbehandlungsoption als die Priorität der Erweiterungsvorrichtung (20) eingestellt ist, der Schritt des Umcodierens der ersten Tastenanweisung und der zweiten Tastenanweisung gemäß der Anweisungscodierungsregel der gesteuerten Spielkonsole (30) ferner umfasst: Identifizieren, ob ein doppelter Tastenwert in der ersten Tastenanweisung und der zweiten Tastenanweisung vorhanden ist, falls ja, Löschen eines doppelten Tastenwertteils in der ersten Tastenanweisung und Umcodieren der ersten Tastenanweisung und der zweiten Tastenanweisung, nachdem der doppelte Tastenwertteil gemäß der Anweisungscodierungsregel der gesteuerten Spielkonsole (30) gelöscht wurde; und
wobei unter einer Bedingung, dass die Konfliktbehandlungsoption als gleichzeitige Verwendung eingestellt ist, der Schritt des Umcodierens der ersten Tastenanweisung und der zweiten Tastenanweisung gemäß der Anweisungscodierungsregel der gesteuerten Spielkonsole (30) ferner umfasst: Identifizieren, ob ein doppelter Tastenwert in der ersten Tastenanweisung und der zweiten Tastenanweisung vorhanden ist, falls ja, gleichzeitiges Beibehalten eines doppelten Tastenwertteils in der ersten Tastenanweisung und der zweiten Tastenanweisung und Umcodieren der ersten Tastenanweisung und der zweiten Tastenanweisung gemäß der Anweisungscodierungsregel der gesteuerten Spielkonsole (30).

2. Verfahren zum Verarbeiten einer Spielsteueranweisung nach Anspruch 1,
wobei die Taste der Erweiterungsvorrichtung (20) eine lineare Taste umfasst und die Konfigurationsinformation ferner eine lineare Funktionsstart-Stopp-Option umfasst, und
wobei der Schritt des Erhaltens eines Auslösesignals der Taste der Erweiterungsvorrichtung (20) umfasst: Empfangen eines Drucksignals der linearen Taste; Überprüfen, ob die lineare Funktionsstart-Stopp-Option konfiguriert ist, um gestartet zu werden; falls ja, Erzeugen des Auslösesignals mit einem Stärkewert entsprechend der Tastendrucktiefe des Drucksignals; und falls nein, Erzeugen des Auslösesignals unter der Bedingung, dass die Tastendrucktiefe des Drucksignals größer als ein eingestellter Auslöseschwellenwert ist.

3. Verfahren zum Verarbeiten einer Spielsteueranweisung nach Anspruch 1 oder 2,
wobei die Konfigurationsinformation ferner eine Steuerungsmodifikationsinformation umfasst, und
wobei der Schritt des Umcodierens der ersten Tastenanweisung und der zweiten Tastenanweisung gemäß der Anweisungscodierungsregel der gesteuerten Spielkonsole (30) ferner umfasst: Modifizieren der ersten Tastenanweisung gemäß der Steuerungsmodifikationsinformation und Umcodieren der modifizierten ersten Tastenanweisung und der zweiten Tastenanweisung gemäß der Anweisungscodierungsregel der gesteuerten Spielkonsole (30).

4. Verfahren zum Verarbeiten einer Spielsteueranweisung nach einem der Ansprüche 1 bis 3, wobei der Schritt des Erhaltens von Konfigurationsinformation der Erweiterungsvorrichtung (20) umfasst:
Verbinden eines Konfigurationsterminals (40) unter Verwendung einer Terminalverbindungsschnittstelle (240) der Erweiterungsvorrichtung (20); und
Empfangen einer von dem Konfigurationsterminals (40) gesendeten Konfigurationsdatei und Analysieren der Konfigurationsdatei, um die Konfigurationsinformation zu erhalten.

5. Verfahren zum Verarbeiten einer Spielsteueranweisung nach Anspruch 4,
wobei die Controllerschnittstelle (230) als drahtgebundene Übertragungsschnittstelle konfiguriert ist, die mit einer Konsolenverbindungsschnittstelle (270) des Spielcontrollers (10) übereinstimmt; und
wobei die Terminalverbindungsschnittstelle (240) und die Konsolenverbindungsschnittstelle (270) als unabhängige drahtlose Übertragungsschnittstellen konfiguriert sind.

6. Verfahren zum Verarbeiten einer Spielsteueranweisung nach einem der Ansprüche 1 bis 5, bevor dem Schritt des Erhaltens einer Steueranweisung, die von der Erweiterungsvorrichtung (20) über die Controllerschnittstelle (230) empfangen wird, ferner umfasst:
Erhalten von Merkmalsinformationen des Spielcontrollers (10) und der gesteuerten Spielkonsole (30);
Bestimmen der Anweisungscodierungsregel des Spielcontrollers (10) gemäß der Merkmalsinformation des Spielcontrollers (10); und
Bestimmen der Anweisungscodierungsregel der gesteuerten Spielkonsole (30) gemäß der Merkmalsinformation der gesteuerten Spielkonsole (30).

7. Verfahren zum Verarbeiten einer Spielsteueranweisung nach Anspruch 6, wobei der Schritt des Bestimmens der Anweisungscodierungsregel der gesteuerten Spielkonsole (30) gemäß der Merkmalsinformation der gesteuerten Spielkonsole (30) umfasst:
Abfragen, ob die Erweiterungsvorrichtung (20) eine entsprechende Anweisungscodierungsregel gemäß der Merkmalsinformation der gesteuerten Spielkonsole (30) speichert;
wenn ja, Aufrufen der Anweisungscodierungsregel der gesteuerten Spielkonsole (30); und
wenn nicht, Senden einer Regelabfrageanforderung an die Netzwerkdienstvorrichtung (50) , und Erhalten einer Anweisungscodierungsregel als Antwort auf die Regelabfrageanforderung von der Netzwerkdienstvorrichtung (50).

8. Erweiterungsvorrichtung (20) eines Spielcontrollers (10), die konfiguriert ist, um an dem Spielcontroller (10) angebracht zu werden, wobei die Erweiterungsvorrichtung (20) mit einer Vielzahl von Tasten (210, 220) versehen ist, umfassend:
eine Controllerschnittstelle (230), die so konfiguriert ist, dass sie mit einer Konsolenverbindungsschnittstelle (270) des Spielcontrollers (10) verbunden ist;
wobei die Konsolenverbindungsschnittstelle (270) konfiguriert ist, um mit einer gesteuerten Spielkonsole (30) zu verbinden; und
einen Prozessor (250), einen Speicher (260) und ein maschinenausführbares Programm, das in dem Speicher (260) gespeichert ist und auf dem Prozessor (250) läuft, wobei der Prozessor (250) bei Ausführung des maschinenausführbaren Programms das Verfahren zum Verarbeiten einer Spielsteueranweisung nach einem der Ansprüche 1 bis 7 implementiert.

## Revendications

1. Procédé de traitement d'une instruction de commande de jeu, comprenant:
l'acquisition d'une instruction de commande reçue par un dispositif d'extension (20) via une interface de contrôleur (230), l'interface de contrôleur (230) étant connectée à une interface de connexion à console (270) d'un contrôleur de jeu (10);
l'analyse de l'instruction de commande pour obtenir une première instruction de touche selon une règle d'encodage d'instruction du contrôleur de jeu (10);
l'acquisition d'une deuxième instruction de touche générée par le déclenchement d'une touche du dispositif d'extension (20);
le recodage de la première instruction de touche et de la deuxième instruction de touche selon une règle d'encodage d'instruction d'une console de jeu contrôlée (30) pour obtenir une instruction compatible; et
l'envoi de l'instruction compatible à la console de jeu contrôlée (30) via l'interface de connexion à console (270) du dispositif d'extension (20),
dans lequel avant l'étape d'acquisition d'une instruction de commande reçue par le dispositif d'extension (20) via l'interface de contrôleur (230), le procédé comprend en outre: l'acquisition d'informations de configuration du dispositif d'extension (20), les informations de configuration comprenant des informations de valeur de touche, et les informations de valeur de touche servant à définir une valeur de touche de la touche du dispositif d'extension (20); et
l'étape d'acquisition d'une deuxième instruction de touche générée par le déclenchement d'une touche (210, 220) du dispositif d'extension (20) comprend: l'acquisition d'un signal de déclenchement de la touche (210, 220) du dispositif d'extension (20), et la conversion du signal de déclenchement en la deuxième instruction de touche selon les informations de valeur de touche,
**caractérisé en ce que** les informations de configuration comprennent en outre une option de gestion des conflits, et l'option de gestion des conflits comprend: priorité du contrôleur (10), priorité du dispositif d'extension (20), et utilisation concurrente, et
dans le cas où l'option de gestion des conflits est définie sur priorité du contrôleur (10), l'étape de recodage de la première instruction de touche et de la deuxième instruction de touche selon une règle d'encodage d'instruction de la console de jeu contrôlée (30) comprend en outre: l'identification de l'existence d'une valeur de touche dupliquée dans la première instruction de touche et la deuxième instruction de touche, si c'est le cas, la suppression de la partie de valeur de touche dupliquée dans la deuxième instruction de touche, puis le recodage de la première instruction de touche et de la deuxième instruction de touche après la suppression de la partie de valeur de touche dupliquée selon la règle d'encodage d'instruction de la console de jeu contrôlée (30);
dans le cas où l'option de gestion des conflits est définie sur priorité du dispositif d'extension (20), l'étape de recodage de la première instruction de touche et de la deuxième instruction de touche selon une règle d'encodage d'instruction de la console de jeu contrôlée (30) comprend en outre: l'identification de l'existence d'une valeur de touche dupliquée dans la première instruction de touche et la deuxième instruction de touche, si c'est le cas, la suppression de la partie de valeur de touche dupliquée dans la première instruction de touche, puis le recodage de la première instruction de touche après suppression de la partie de valeur de touche dupliquée et de la deuxième instruction de touche selon la règle d'encodage d'instruction de la console de jeu contrôlée (30); et
dans le cas où l'option de gestion des conflits est définie sur utilisation concurrente, l'étape de recodage de la première instruction de touche et de la deuxième instruction de touche selon une règle d'encodage d'instruction de la console de jeu contrôlée (30) comprend en outre: l'identification de l'existence d'une valeur de touche dupliquée dans la première instruction de touche et la deuxième instruction de touche, si c'est le cas, la conservation simultanée des parties de valeur de touchede touche dupliquées dans la première instruction de touche et la deuxième instruction de touche, et puis le récodage de la première instruction de touche et de la deuxième instruction de touche selon la règle d'encodage d'instruction de la console de jeu contrôlée (30).

2. Procédé de traitement d'une instruction de commande de jeu selon la revendication 1,
dans lequel la touche du dispositif d'extension (20) comprend une touche linéaire, et les informations de configuration comprenant en outre une option de démarrage-arrêt de fonction linéaire, et
l'étape d'acquisition d'un signal de déclenchement de la touche du dispositif d'extension (20) comprend: la réception d'un signal d'appui sur la touche linéaire; la vérification si l'option de démarrage-arrêt de fonction linéaire est configurée pour être activée; si c'est le cas, la génération du signal de déclenchement avec une valeur de force selon la profondeur d'enfoncement de la touche du signal d'appui; et si ce n'est pas le cas, la génération du signal de déclenchement dans le cas où la profondeur d'enfoncement de la touche du signal d'appui dépasse un seuil prédéfini.

3. Procédé de traitement d'une instruction de commande de jeu selon la revendication 1 ou 2,
dans lequel les informations de configuration comprennent en outre des informations de modification du contrôleur, et
l'étape de recodage de la première instruction de touche et de la deuxième instruction de touche selon une règle d'encodage d'instruction d'une console de jeu contrôlée (30) comprend en outre: la modification de la première instruction de touche selon les informations de modification du contrôleur, puis le recodage de la première instruction de touche modifiée et de la deuxième instruction de touche selon la règle d'encodage d'instruction de la console de jeu contrôlée (30).

4. Procédé de traitement d'une instruction de commande de jeu selon l'une quelconque des revendications 1 à 3, dans lequel l'étape d'acquisition des informations de configuration du dispositif d'extension (20) comprend:
la connexion à un terminal de configuration (40) via une interface de connexion à terminal (240) du dispositif d'extension (20); et
la réception d'un fichier de configuration envoyé par le terminal de configuration (40), et l'analyse du fichier de configuration pour obtenir les informations de configuration.

5. Procédé de traitement d'une instruction de commande de jeu selon la revendication 4,
dans lequel l'interface de contrôleur (230) est configurée comme une interface de transmission filaire compatible avec l'interface de connexion à console (270) du contrôleur de jeu (10); et
l'interface de connexion à terminal (240) et l'interface de connexion à console (270) sont configurées comme des interfaces de transmission sans fil indépendantes.

6. Procédé de traitement d'une instruction de commande de jeu selon l'une quelconque des revendications 1 à 5, comprenant en outre avant l'étape d'acquisition d'une instruction de commande par le dispositif d'extension (20) via une interface de contrôleur (230):
l'acquisition d'informations de caractéristiques du contrôleur de jeu (10) et de la console de jeu contrôlée (30);
la détermination de la règle d'encodage d'instruction du contrôleur de jeu (10) selon les informations de caractéristiques du contrôleur de jeu (10); et
la détermination de la règle d'encodage d'instruction de la console de jeu contrôlée (30) selon les informations de caractéristiques de la console de jeu contrôlée (30).

7. Procédé de traitement d'une instruction de commande de jeu selon la revendication 6, dans lequel l'étape de détermination de la règle d'encodage d'instruction de la console de jeu contrôlée (30) selon les informations de caractéristiques de la console de jeu contrôlée (30) comprend:
l'interrogation si le dispositif d'extension (20) stocke une règle d'encodage d'instruction correspondante selon les informations de caractéristiques de la console de jeu contrôlée (30);
si c'est le cas, l'appellation de la règle d'encodage d'instruction de la console de jeu contrôlée (30);
si ce n'est pas le cas, l'envoi d'une demande de règle à un dispositif de service réseau (50), et l'acquisition d'une règle d'encodage d'instruction répondant à la demande de règle à partir du dispositif de service réseau (50).

8. Dispositif d'extension (20) d'un contrôleur de jeu (10) configuré pour être attaché au contrôleur de jeu (10), dans lequel le dispositif d'extension (20) est pourvu d'une pluralité de touches (210, 220) et comprenant:
une interface de contrôleur (230) configurée pour être connectée à une interface de connexion à console (270) du contrôleur de jeu (10);
l'interface de connexion à console (270) configurée pour être connectée à la console de jeu contrôlée (30); et
un processeur (250), une mémoire (260) et un programme exécutable par machine stocké dans la mémoire (260) et exécuté par le processeur (250), le processeur (250), lors de l'exécution du programme, mettant en œuvre le procédé de traitement d'une instruction de commande de jeu selon l'une quelconque des revendications 1 à 7.
